# EUROPÄISCHE PATENTANMELDUNG

(11) **EP 3 624 023 A1**
(43) Veröffentlichungstag der Anmeldung: **18.03.2020**
(21) Anmeldenummer: 18194222.8
(22) Anmeldetag: 13.09.2018
(51) Int. Cl.: G06Q 10/00

(54) **VERFAHREN ZUR DATENERFASSUNG UND -KOMBINATION**

(71) Anmelder: Kaeser Kompressoren SE, 96450 Coburg (DE)
(72) Erfinder: FOERSTER, Andreas, 96450 Coburg (DE); BIRKENFELD, Andreas, 96450 Coburg (DE)
(74) Vertreter: Meissner Bolte Partnerschaft mbB

(57) **Zusammenfassung**

Die Erfindung betrifft ein Verfahren zur Datenerfassung und - kombination, bei dem Daten einer Drucklufterzeugungs- oder Druckluftaufbereitungskomponente erfasst und mit weiteren Daten zur Erstellung eines Datensatzes kombiniert werden,
umfassend die folgenden Schritte:
- einen Identifikations-Erfassungsschritt (100), bei dem Daten zur Identifikation der Komponenten erfasst werden,
- einen Zustandsdaten-Erfassungsschritt (101), bei dem Zustandsdaten der Drucklufterzeugungs- oder Druckluftaufbereitungskomponente erfasst werden,
- einen Instruktions-Erfassungsschritt (102), in dem Daten, die die gewünschten Instruktionen deklarieren, erfasst werden sowie
- einen Personenerfassungsschritt (103), in dem eine oder mehrere Personen bzw. eine Organisation als Verantwortlicher identifiziert werden und
- Zusammenführung der in dem Identifikations-Erfassungsschritt (100), dem Zustandsdaten-Erfassungsschritt (101), dem Instruktions-Erfassungsschritt (102) und dem Personenerfassungsschritt (103) erfassten Daten in einer elektronischen Datenverarbeitungseinrichtung zu einem über ein Datennetz übertragbaren zusammenhängenden Datensatz.

## Beschreibung

Die Erfindung betrifft ein Verfahren zur Datenerfassung und -kombination, bei dem Daten einer Drucklufterzeugungs- oder Druckluftaufbereitungskomponente erfasst und mit weiteren Daten zur Erstellung eines Datensatzes kombiniert werden.

Gerade zur Abwicklung einer Wartungs- oder Servicemaßnahme an Drucklufterzeugungs- oder Druckluftaufbereitungskomponenten sind Voraussetzungen zu erfüllen. Die Voraussetzungen umfassen die Bereitstellung von Daten unterschiedlicher Herkunft, welche in Kombination für die Durchführung einer solchen Maßnahme notwendig sind. Grundsätzlich können folgende, mindestens erforderliche Daten unterschieden werden:
- Identifikationsdaten zur Identifikation einer Komponente (z. B. umfassend eine eindeutige Identnummer, welche ab Werk dauerhaft zugeordnet ist),
- Zustandsdaten, die den Zustand einer Komponente betreffen (z. B. Wartungszählerstände, Status- und Fehlermeldungen),
- Instruktionsdaten, die die gewünschten Instruktionen deklarieren (insbesondere einen Geschäftsvorgang, z. B. einen Serviceauftrag, eine Angebotsanforderung, etc.), sowie
- Personendaten, indem eine oder mehrere Personen bzw. eine Organisation als Verantwortlicher identifiziert werden, insbesondere als Verantwortlicher zur Auslösung eines Instruktionsvorgangs, wie einem Serviceauftrag, einer Angebotsanforderung.

Herkömmlicherweise mussten bei der Beauftragung einer Wartungs- oder Servicemaßnahme an Drucklufterzeugungs- oder Druckluftaufbereitungskomponenten telefonische Instruktionen oder schriftliche Instruktionen erteilt werden, wobei weitere notwendige Informationen entweder auf dem Auftragsschreiben manuell ergänzt oder seitens des Instruktionsempfängers nachgetragen bzw. nachgefragt werden mussten.

Die Aufgabe der vorliegenden Erfindung besteht darin, ein Verfahren anzugeben, bei dem Daten einer Drucklufterzeugungs- oder Druckluftaufbereitungskomponente erfasst und mit weiteren Daten zur Erstellung eines Datensatzes kombiniert werden, um die Abwicklung einer Instruktionsmaßnahme in erheblicher Weise zu vereinfachen.

Diese Aufgabe wird mit einem Verfahren gemäß den Schritten nach Patentanspruch 1 gelöst. Nach einem Kerngedanken der vorliegenden Erfindung umfasst das erfindungsgemäße Verfahren die folgenden Schritte:
- einen Identifikations-Erfassungsschritt, bei dem Daten zur Identifikation der Komponenten erfasst werden,
- einen Zustandsdaten-Erfassungsschritt, bei dem Zustandsdaten der Drucklufterzeugungs- oder Druckluftaufbereitungskomponente erfasst werden,
- einen Instruktions-Erfassungsschritt, in dem Daten, die die gewünschten Instruktionen deklarieren, erfasst werden sowie
- einen Personenerfassungsschritt, in dem eine oder mehrere Personen bzw. eine Organisation als Verantwortlicher identifiziert werden und
- Zusammenführung der in dem Identifikations-Erfassungsschritt, dem Zustandsdaten-Erfassungsschritt, dem Instruktions-Erfassungsschritt und dem Personenerfassungsschritt erfassten Daten in einer elektronischen Datenverarbeitungseinrichtung zu einem über ein Datennetz übertragbaren zusammenhängenden Datensatz.

Durch die Schaffung eines derart generierten, zusammenhängenden Datensatzes wird die Abwicklung einer Instruktionsmaßnahme in ganz erheblicher Weise vereinfacht. Für die Abwicklung einer Wartungs- oder Servicemaßnahme beispielsweise stehen dem Instruktionsempfänger alle notwendigen Informationen parat, so dass Zeitverzögerungen durch Rückfragen, Bestellung falscher Teile o.ä. vermieden werden. Der Instruktionsempfänger erhält darüber hinaus den zusammenhängenden Datensatz übermittelt, so dass er - anders als im Stand der Technik - nicht für die Beschaffung und/oder Korrelation der verschiedenen Informationen verantwortlich ist. Er kann vielmehr nach Eingang des zusammenhängenden Datensatzes die Instruktionsmaßnahme unmittelbar vorbereiten und zum geeigneten Zeitpunkt durchführen.

Insofern werden die Daten bevorzugtermaßen als zusammenhängender Datensatz an einen Instruktionsempfänger übertragen.

Unter einem zusammenhängenden Datensatz soll ein Datensatz verstanden werden, der gemeinsam empfangen, gespeichert und verarbeitet werden kann, vorzugsweise auch gleichzeitig übersandt wird, wobei auch Übertragungen im Multiplexverfahren möglich sind, also der zusammenhängende Datensatz nicht als Ganzes übertragen werden muss. Es ist sogar eine zeitversetzte Übertragung einzelner Daten des zusammenhängenden Datensatzes denkbar, solange beim Instruktionsempfänger der zusammenhängende Datensatz als solcher erkannt, abgespeichert bzw. weiterverarbeitet werden kann.

Herkömmlicherweise werden die Daten am Display einer elektronischen Steuerung der Drucklufterzeugungs- oder Druckluftaufbereitungskomponente aufgerufen, abgelesen und manuell aufgezeichnet (z. B. als Formular, insbesondere auf Papier oder ausgestaltet als interaktives PDF etc.) und per Brief, E-Mail, Telefax übertragen. Dieses Vorgehen ist aber hinsichtlich des erforderlichen Zeitaufwandes und der gegebenen Fehleranfälligkeit als nachteilig anzusehen.

Weiterhin wurden entsprechende Daten gemäß dem Vorgehen nach dem Stand der Technik auch auf externe Datenträger kopiert und diese Datenträger physisch versandt. Auch hier ist ein erheblicher Zeitaufwand notwendig und es entsteht ein zeitlicher Versatz bezogen auf die Datenverfügbarkeit.

Weiter gab es auch Lösungen, bei denen über eine Kommunikationsschnittstelle mit einem Endgerät, einem Laptop, die Daten ausgelesen, ausgewertet und ggf. übertragen werden konnten. Auch hier musste jedoch eine jeweils kompatible Kommunikationsschnittstelle gegeben sein und ein entsprechendes Endgerät angeschlossen werden. Dieses Vorgehen erscheint ebenfalls aufwändig.

Erfindungsgemäß wird der Zustandsdaten-Erfassungsschritt allerdings zielgerichtet im Hinblick auf die Erstellung des erfindungsgemäßen zusammenhängenden Datensatzes durchgeführt, so dass ggf. auch eine zielgerichtete Vorauswahl im Hinblick auf eine anstehende Instruktionsmaßnahme durchgeführt wird.

In einer vorteilhaften Ausgestaltung wird im Identifikations-Erfassungsschritt auf die in einer elektronischen Steuerung der Drucklufterzeugungs- oder Druckluftaufbereitungskomponente abgelegten bzw. zugreifbaren Daten zurückgegriffen, beispielsweise auf eine oder mehrere der folgenden Informationen:
- Identnummer der Drucklufterzeugungs- oder Druckluftaufbereitungskomponente und/oder
- Identnummern relevanter Subkomponenten der Drucklufterzeugungs- oder Druckluftaufbereitungskomponente, wie eines Antriebsmotors, einer Steuerung, eines Verdichterblocks, etc.

Unter einer Identnummer wird eine Kodifizierung oder Kennung verstanden, die beispielsweise auch als Zahlen-Buchstaben-Kombination oder als andere eindeutige Kennzeichnung gegeben sein kann, um eine Drucklufterzeugung- oder Druckluftaufbereitungskomponente oder eine Subkomponente eindeutig zu identifizieren. Eine derartige Identifizierung über eine Identnummer wäre beispielsweise auch durch eine Equipment- oder Serialnummer gegeben.

In einer weiterhin bevorzugten Ausgestaltung wird im Zustands-Erfassungsschritt auf die in einer elektronischen Steuerung der Drucklufterzeugungs- oder Druckluftaufbereitungskomponente abgelegten bzw. zugreifbaren Daten zurückgegriffen.

Beispielsweise können derartige Daten Zählerstände, wie beispielsweise Zählerstände eines Wartungszählers, eines Laufstundenzählers oder eines Energiezählers, eines Laststundenzählers umfassen. Die im Zustands-Erfassungsschritt erfassten Daten können aber auch Status- und Fehlermeldungen umfassen.

Schließlich können die in einem Zustands-Erfassungsschritt erfassten Daten Zeitinformationen,
- Parametereinstellungen, wie als Standardeinstellung vorgegeben oder kundenspezifisch konfiguriert
- Eine Meldehistorie
- Aktuelle Prozessdaten (wie Drücke, Temperaturen, Drehzahlen, etc.)
- Historische Prozessdaten
- Aggregierte bzw. verarbeitete Prozessdaten, wie beispielsweise eine räumlich über mehrere Temperatursensoren und/oder zeitlich über eine Zeitspanne gemittelte Motorwicklungstemperatur

In einer ebenfalls bevorzugten Ausgestaltung werden in einem oder mehreren Datenerfassungsschritten, nämlich im Identifikations-Erfassungsschritt oder im Zustandsdaten-Erfassungsschritt oder im Instruktions-Erfassungsschritt oder im Personenerfassungsschritt die Daten durch ein mobiles Endgerät, wie beispielsweise ein Smartphone oder ein Tablet erfasst, wobei die Erfassung durch ein mobiles Endgerät eine oder mehrere der folgenden Eingabe- und/oder Erfassungsmöglichkeiten umfasst:
- Texteingabe
- Checkboxen zur binären Auswahl
- Fotoaufnahmen
- Filmaufnahmen
- Sprachaufnahmen
- Vibrationsmessungen

In einer besonderen Ausgestaltung umfassen die in einem oder mehreren Datenerfassungsschritten, nämlich im Identifikations-Erfassungsschritt oder im Zustandsdaten-Erfassungsschritt oder im Instruktions-Erfassungsschritt oder im Personenerfassungsschritt durch ein mobiles Endgerät, wie beispielsweise ein Smartphone oder ein Tablet, erfassten Daten auch oder ausschließlich die aktuelle geographische Position des mobilen Endgeräts.

In einer bevorzugten Ausgestaltung der vorliegenden Erfindung kann insofern ein mobiles Endgerät bei der Zusammenstellung des zusammenhängenden Datensatzes erhebliche Hilfestellung leisten. Gerade durch Foto- oder Filmaufnahmen lassen sich relevante Daten relativ rasch erfassen und zur Komplementierung des zusammenhängenden Datensatzes aufbereiten.

In einer bevorzugten Ausgestaltung werden im Identifikations-Erfassungsschritt die Daten zur Identifikation der Komponenten und/oder im Zustandsdaten-Erfassungsschritt die Daten zur Erfassung der Zustandsdaten der Drucklufterzeugungs- oder Druckluftaufbereitungskomponenten durch Auslesen eines der Steuerung zugeordneten Speichers der Drucklufterzeugungs- oder Druckluftaufbereitungskomponente erfasst. Das Auslesen kann die Weitergabe der Daten über eine elektronische Schnittstelle drahtgebunden oder drahtlos oder die Ausgabe auf einem Display zur Erfassung durch ein mobiles Endgerät umfassen.

Ganz generell kann in einer bevorzugten Ausgestaltung vorgesehen sein, dass in einer Steuerung der Drucklufterzeugungs- oder Druckluftaufbereitungskomponente bereits vorhandene Daten an ein der Drucklufterzeugungs- oder Druckluftaufbereitungskomponente zugeordnetes, insbesondere integral angeordneten Display ausgegeben und mittels Aufnahme einer Bild-/Filmdatei erfasst werden. Dies kann Bestandteil einer oder mehrerer der erfindungsgemäßen Erfassungsschritt, nämlich Bestandteil des Identifikations-Erfassungsschritts und/oder des Zustandsdaten-Erfassungsschritts und/oder des Instruktions-Erfassungsschritts und/oder des Personenerfassungsschritts sein.

Eine derartige Erfassung von Daten lässt sich leicht und zielgerichtet durchführen. Darüber hinaus kann die Ausgabe der Daten an einem Display in relativ komprimierter Form erfolgen, da eine Bild-/Filmdatei auch relativ große Datenmengen abspeichern kann. Insbesondere kann die Ausgabe der Daten an einem Display auch in kodierter Form, beispielsweise als Barcode oder QR-Code oder in anderer geeigneter Weise erfolgen, um die zu übertragenden Daten ggf. noch weiter zu verdichten.

Gemäß einer bevorzugten Überlegung der vorliegenden Erfindung werden für den Identifikations-Erfassungsschritt und/oder den Zustandsdaten-Erfassungsschritt relevante Daten durch ein Bildverarbeitungsverfahren (insbesondere OCR-Verfahren - optical character recognition-Verfahren) erfasst. Die Erfassung relevanter Daten durch ein Bildverarbeitungsverfahren, insbesondere ein OCR-Verfahren, kann alternativ oder zusätzlich aber auch im Instruktions-Erfassungsschritt und/oder im Personenerfassungsschritt vorgenommen werden. Ganz generell ist festzuhalten, dass ein derartiges OCR-Verfahren eine einfache und zweckmäßige Ausgestaltung zur Erfassung der relevanten Daten ist, die für eine Vielzahl unterschiedlicher Drucklufterzeugungs- oder Druckluftaufbereitungskomponenten anwendbar ist.

In einer bevorzugten Ausgestaltung können die erfassten Bild-/Filmdateien eine Filterung durchlaufen, um redundante Informationen zu reduzieren.

In einer weiterhin bevorzugten Ausgestaltung wird eine erfasste Filmdatei in eine Folge von Einzelbildern zerlegt. Die Einzelbilder können dann einfacher verarbeitet werden, insbesondere auch in einem OCR-Verfahren, ggf. unter Beseitigung von redundanten Informationen zur Erzeugung extrahierter Daten.

In einer bevorzugten Ausgestaltung ist es möglich, dass im Identifikations-Erfassungsschritt, im Zustandsdaten-Erfassungsschritt, im Instruktions-Erfassungsschritt oder im Personenerfassungsschritt oder im Schritt der Zusammenführung der Daten zu einem neuen Datensatz eine Erfassung oder Einbeziehung von Daten, die in einem mobilen Endgerät bereits vorhanden sind oder sich mit einem mobilen Endgerät ggf. auf Anforderung erfassen lassen, erfolgt.

In einer konkret möglichen Ausgestaltung umfasst eine solche Erfassung oder Einbeziehung von Daten:
- die Erfassung von Positions- und Zeitdaten,
- die Aufnahme von weiteren Bild- oder Filmdateien,
- die Aufnahme von Sprachdaten,
- die Aufnahme von Schwingungsdaten

In einer besonderen Ausgestaltung kann vorgesehen sein, dass der Instruktions-Erfassungsschritt das Abfotografieren von Arbeitspapieren oder von bestimmten Abschnitten von Arbeitspapieren, Informationen zu einzelnen Arbeitsschritten enthalten, umfasst. Hierfür können beispielsweise Strichcodes für bestimmte Arbeiten, in deren Zuge bestimmte Informationen aufgenommen und zu einem Instruktionsempfänger gesandt werden sollen, vorgesehen sein. In einer ebenfalls bevorzugten Ausgestaltung kann der Instruktions-Erfassungsschritt die Bereitstellung eines Arbeitsauftrags in elektronischer Form, insbesondere von einem mobilen Endgerät aus, umfassen. Denkbar wäre insbesondere auch, dass auf dem mobilen Endgerät oder in der Drucklufterzeugungs- oder Druckluftaufbereitungskomponente bzw. deren Steuerung typische Fälle von "Instruktionen" codiert bereitgestellt werden, insbesondere als Ziffernfolge, Strichcode, QR-Code. Solche typischen Fälle könnten beispielsweise die Anforderung technischer Beratung bei Störungen, die Zusendung eines Angebots für bestimmte Wartungsmaßnahmen, etc. umfassen.

Die Erfindung betrifft auch ein computerlesbares Programm, das konfiguriert ist, das Verfahren nach dem erfindungsgemäßen Verfahren durchzuführen. Ein derartiges Programm kann beispielsweise auf einem mobilen Endgerät abgelegt sein und die Erzeugung und ggf. auch die spätere Übermittlung des zusammenhängenden Datensatzes steuern.

Die Erfindung wird nachstehend auch hinsichtlich weiterer Merkmale und Vorteile anhand der Beschreibung von Ausführungsbeispielen und unter Bezugnahme auf die beiliegenden Zeichnungen näher erläutert. Hierbei zeigen:
- Fig. 1: ein Ablaufschema einer Ausführungsform, die gemäß dem erfindungsgemäßen Verfahren arbeitet,
- Fig. 2: eine Veranschaulichung verschiedener Möglichkeiten zur Erfassung von Zustands- und/oder Identifikationsdaten einer Drucklufterzeugungs- oder Druckluftaufbereitungskomponente,
- Fig. 3: verschiedene Verfahren zur Dekodierung der Zustands- und/oder Identifikationsdaten einer Drucklufterzeugungs- oder Druckluft-aufbereitungskomponente,
- Fig. 4: eine Veranschaulichung verschiedener Möglichkeiten zur Datenerfassung,
- Fig. 5: verschiedene Optionen zur Datenerfassung gemäß dem erfindungsgemäßen Verfahren,
- Fig. 6: verschiedene Möglichkeiten der Datenerfassung durch Beisteuerung von Sprachdaten und/oder Schwingungsdaten,
- Fig. 7: eine Veranschaulichung einer optional möglichen Datenreferenzierung,
- Fig. 8: Erläuterung verschiedener Möglichkeiten der Datenaufbereitung sowie der Nutzung des zusammengeführten Datensatzes,
- Fig. 9: eine Ausführungsform eines Ablaufs gemäß dem erfindungsgemäßen Verfahren,
- Fig. 10: eine mögliche Ausführungsform zur Erfassung von Zustandsdaten,
- Fig. 11: eine alternative Ausführungsform zur Erfassung von Zustandsdaten,
- Fig. 12: eine nochmals alternative Ausführungsform zur Erfassung von Zustandsdaten,
- Fig. 13: eine Ausführungsform zur Datenerfassung durch Aufnahme einer Filmdatei.

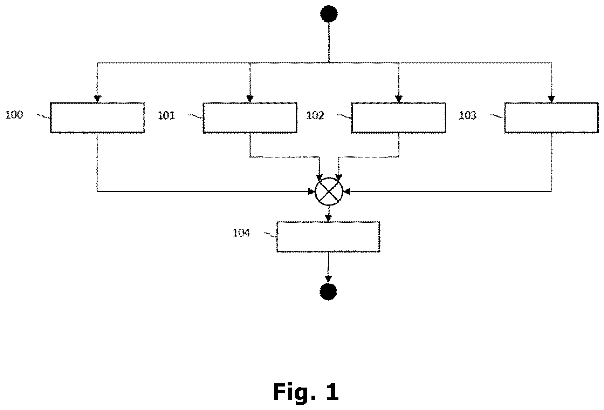

In Figur 1 ist ein Ablaufschema einer Ausführungsform, die gemäß dem erfindungsgemäßen Verfahren arbeitet, veranschaulicht. Dabei laufen mehrere Erfassungsschritte unabhängig oder zumindest weitestgehend unabhängig voneinander ab. In einem Identifikations-Erfassungsschritt 100 werden Daten einer Drucklufterzeugungs- oder Druckluftaufbereitungskomponente erfasst. Dies kann z.B. eine eindeutige Identnummer umfassen, welche ab Werk dauerhaft zugeordnet ist.

In einem Zustandsdaten-Erfassungsschritt 101 werden Zustandsdaten erfasst, die den Zustand einer Komponente betreffen (z.B. Wartungszählerstände, Status- und/oder Fehlermeldungen).

In einem Instruktions-Erfassungsschritt 102 werden Instruktionsdaten erfasst, die die gewünschten Instruktionen deklarieren (insbesondere einen Geschäftsvorgang, z.B. einen Serviceauftrag, eine Angebotsanforderung, etc.).

In einem Personenerfassungsschritt 103 schließlich werden Personendaten erfasst, indem eine oder mehrere Personen bzw. eine Organisation als Verantwortlicher identifiziert werden, insbesondere als Verantwortlicher zur Auslösung eines Instruktionsvorgangs, wie einem Serviceauftrag, einer Angebotsanforderung, etc. Diese Daten können z.B. Name/Adresse, eine Kundennummer, etc. umfassen. In einem Zusammenführungsschritt 104 werden die im Identifikations-Erfassungsschritt 100, dem Zustandsdaten-Erfassungsschritt 101, dem Instruktions-Erfassungsschritt 102 und dem Personenerfassungsschritt 103 erfassten Daten zu einem über ein Datennetz übertragbaren zusammenhängenden Datensatz zusammengeführt. Die Zusammenführung zu einem vorbeschriebenen Datensatz erfolgt vorzugsweise vor Versendung an einen Instruktionsempfänger, beispielsweise durch den Betreiber einer Kompressoranlage. Der Instruktionsempfänger hat damit alle notwendigen Daten in einem zusammengeführten bzw. zusammenhängenden Datensatz 25 nach Übertragung vom Instruktionsgeber an den Instruktionsempfänger vorliegen.

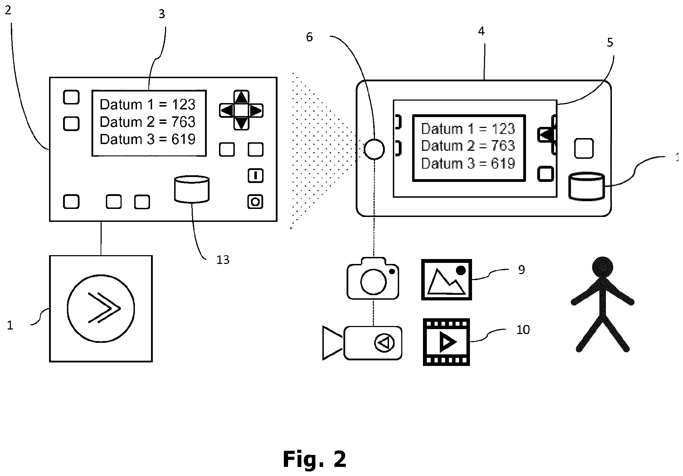

In Figur 2 ist eine Veranschaulichung verschiedener Möglichkeiten zur Erfassung von Zustands- und/oder Identifikationsdaten einer Drucklufterzeugungs- oder Druckluftaufbereitungskomponente veranschaulicht. Hierbei sind verschiedene Varianten, u.a. die nachfolgenden Varianten denkbar:

### Variante 1:

Die zu erfassenden Daten befinden sich in einem im Zugriff einer elektronischen Steuerung 2 befindlichen Speicher 13 . Die Steuerung 2 kann dabei einer Drucklufterzeugungs- oder Druckluftaufbereitungskomponente zugeordnet, insbesondere integral mit dieser verbunden sein. Die Daten können sich dabei auf einer beliebigen Art von Speicher 13 befinden. So ist es nicht notwendig, dass die elektronische Steuerung 2 und der Speicher 13 in einer festen Position zueinander befinden, beispielsweise kann der Speicher ganz oder teilweise auch auf einer Speicherkarte implementiert oder räumlich getrennt von der Steuerung 2 über ein Netzwerk verbunden sein. Die Daten werden auf einem Display 3 der elektronischen Steuerung 2 angezeigt. Ein mobiles Endgerät 4 verfügt über eine Kamera 6 und die Fähigkeit, Fotos 5 aufzunehmen und als entsprechende Bilddateien 9 zu speichern.

Es wird ein Foto 5 zur Erzeugung einer Bilddatei 9 des Displays 3 der elektronischen Steuerung 2 aufgenommen. Das Foto 5 wird als Bilddatei 9 weiter verarbeitet, vorzugsweise in einem Speicher 12 des mobilen Endgeräts 4 abgelegt.

### Variante 2:

In einer zweiten Variante werden die von der elektronischen Steuerung 2 bereitgestellten Daten auf mehreren Masken des Displays 3 dargestellt. Die Masken werden in zeitlicher Abfolge auf dem Display 3 angezeigt. Ein mobiles Endgerät 4 verfügt über eine Kamera 6 mit der Fähigkeit, Filme 5' aufzunehmen und als entsprechende Filmdateien 10 zu speichern. Es wird ein Film 5' der Abfolge von Masken auf dem Display 3 erstellt, so dass die zeitliche Abfolge der Masken mit unterschiedlichen Dateninhalten erfasst wird. Der Film 5' wird als Filmdatei 10 in einem Speicher 12 des mobilen Endgeräts 4 abgelegt.

Die Datenrepräsentation auf dem Display 3 der elektronischen Steuerung 2 kann auf unterschiedliche Weise erfolgen, so dass verschiedene Varianten einer Datenrepräsentation denkbar sind, beispielsweise:
- textuell, also als Kombination von Buchstaben, Zahlen, Sonderzeichen, etc.,
- graphisch und/oder als reines Bild,
- als strukturierte Graphik, in welcher Daten codiert sind, z.B. 2D-Codes, Strichcodes, QR-Codes,
- als systematisch modifizierte Bilder,
- als systematisch strukturierte Graphiken, also Codierungen, die sich über die Zeit verändern.

Gerade das Verfahren des Filmens wird bevorzugt, da sich hierdurch eine relativ große Datenmenge innerhalb kurzer Zeit erfassen lässt.

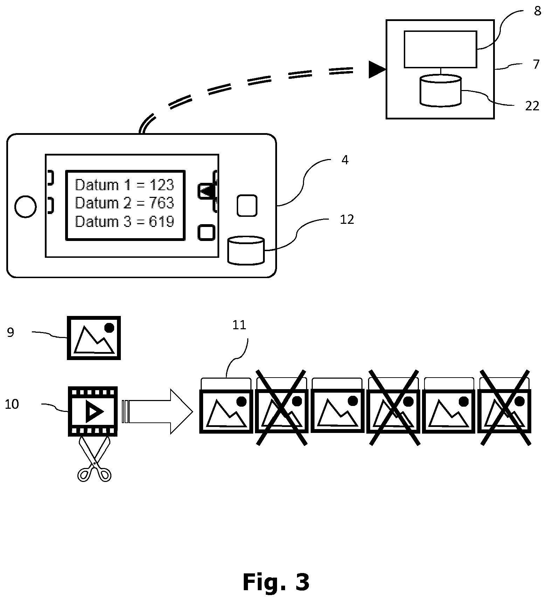

In Figur 3 werden verschiedene Verfahren zur Decodierung der Zustands- und/oder Identifikationsdaten einer Drucklufterzeugungs- oder Druckluftaufbereitungskomponente veranschaulicht. Auch hier sind verschiedene Varianten denkbar, wobei die nachfolgenden zwei Varianten exemplarisch erläutert werden:

### Variante 1:

Es werden Bild/Filmdateien 9, 10 mit Hilfe eines Datenverarbeitungsprogramms auf dem mobilen Endgerät 4 verarbeitet. Diese Verarbeitung kann eine Filterung der Bilddatei 9 bzw. der Filmdateien 10 umfassen, so dass als Ergebnis dieser Filterung extrahierte Daten erzeugt werden und somit die Redundanz der ursprünglichen Bilddatei 9 bzw. die ursprüngliche Filmdatei 10 verringert ist. Daten können z.B. in Form von Zeichenketten in den Fotos 5 bzw. Filmen 5' enthalten sein. Ein geeignetes Verfahren zur Extraktion solcher Zeichenketten ist z.B. OCR (Optical Character Recognition). Wenn Daten in codierter Form in Fotos 5 bzw. Filmen 5' enthalten sind, z.B. als 2D-Code, Strichcode, QR-Code, etc., ist ein geeignetes Decodierungsverfahren anzuwenden. Die extrahierten Daten werden im Speicher 12 des mobilen Endgeräts 4 abgelegt.

### Variante 2:

Bilddateien 9 oder Filmdateien 10 werden über einen geeigneten Kommunikationsweg an einen entfernten Rechner 7 gesandt. Auf dem entfernten Rechner 7 läuft ein Verarbeitungsprogramm 8 ab, das die Decodierung der Bilddateien 9 bzw. Filmdateien 10 durchführt und extrahierte Daten erzeugt. Die Daten können dann versandt und in einem entfernten Rechner 7 gespeichert werden. Bevorzugtermaßen werden die Daten mit anderen Daten zu einem erfindungsgemäßen zusammenhängenden Datensatz kombiniert und an einen Instruktionsempfänger übersandt.

Im Rahmen eines Vorbearbeitungsschritts können Filmdateien 10 vor der Decodierung in eine Folge von Einzelbildern 11 zerlegt werden. Beispielsweise, wenn die Bildfrequenz der Filmaufnahme höher als die Maskenfrequenz des Displays ist, werden mehrere Bilder der gleichen Maske in Film 5' enthalten sein, so dass für jede Maske des Displays 3 mehrere Bilder im Film 5' vorhanden sind. Die Einzelbilder 11 können insofern derart reduziert werden, dass nur eine Maske mit unterschiedlichem Dateninhalt pro Einzelbild 11 des Films 5' verbleibt.

Ein derartiger Vorverarbeitungsschritt kann beispielsweise auf dem mobilen Endgerät 4 und/oder auf einem entfernten Rechner 7 durchgeführt werden.

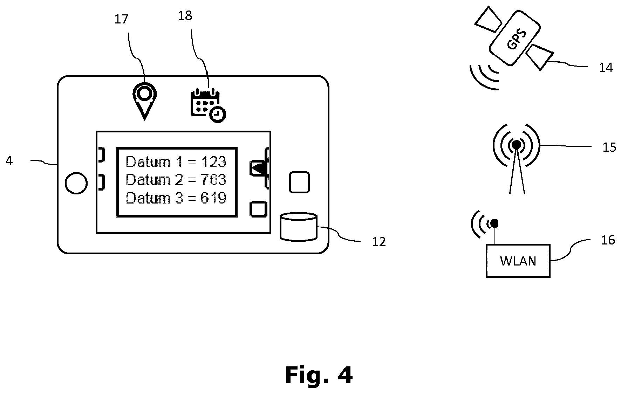

In Figur 4 sind verschiedene Möglichkeiten zur Datenerfassung veranschaulicht.

Eine Datenerfassung bzw. ergänzende Datenerfassung kann die Beistellung beliebiger ergänzender Daten umfassen. Beispielsweise können Positions- und/oder Zeitdaten erfasst bzw. ergänzt werden. Das mobile Endgerät 4 verfügt über Schnittstellen zu äußeren Datenquellen, wie z.B. GPS-Satellit 14, Mobilfunkzelle 15, WLAN-Router 16 etc. GPS-Satelliten 14 stellen eine hochgenaue Position (Geolocation) sowie eine Atomuhrzeit bereit. Mobilfunkzellen 15 stellen eine Uhrzeit zur Verfügung; auch die Position des in der Mobilfunkzelle 15 erfassten mobilen Endgeräts 4 kann ausreichend sicher ermittelt werden. WLAN-Router 16 verfügen über eine synchronisierte Uhr und ggf. über Positionsdaten. Das mobile Endgerät 4 hat aus mindestens einer dieser Quellen die aktuellen Positions- und Zeitdaten 17, 18 verfügbar. Die Positionsdaten 17 und/oder die Zeitdaten 18 können zum Zeitpunkt der Aufnahme von Fotos 5 oder Filmen 5' erfasst und gespeichert werden. Die Positionsdaten 17 und/oder die Zeitdaten 18 werden vorzugsweise gemeinsam mit den Bilddateien 9 bzw. den Filmdateien 10 im Speicher 12 des mobilen Endgeräts 4 abgelegt.

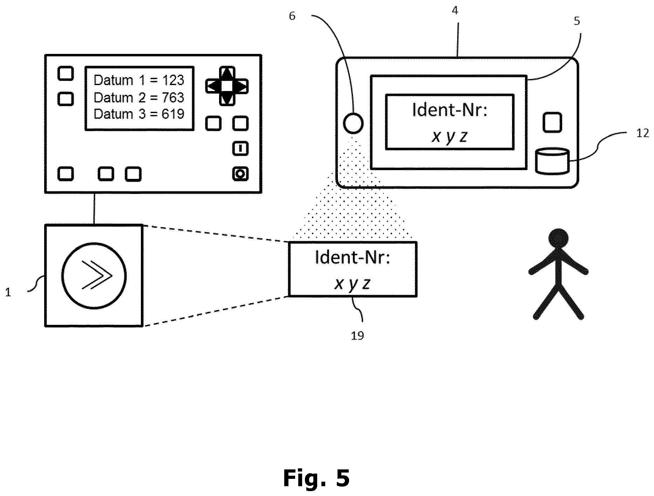

In Figur 5 sind verschiedene Optionen zur Datenerfassung gemäß dem erfindungsgemäßen Verfahren veranschaulicht. Diese Form der Datenerfassung kann auf den Identifikations-Erfassungsschritt 100 angewandt und/oder mit anderen Erfassungsschritten im Sinne einer ergänzenden Datenerfassung kombiniert werden. Mit Hilfe der Kamera 6 wird ein Foto 5 eines Typenschilds 19 der zugeordneten Drucklufterzeugungs- oder Druckluftaufbereitungskomponente erfasst. Die aus dem Foto 5 erzeugte Bilddatei 9 des Typenschildes kann anderen Bilddateien 9, wie Bilddateien, wie sie im Zustandsdaten-Erfassungsschritt 101 erhoben werden, zugeordnet werden und im Speicher 12 des mobilen Endgeräts 4 abgelegt oder vor bzw. während oder auch nach Übertragung an einen entfernten Rechner 7 mit weiteren Daten kombiniert werden.

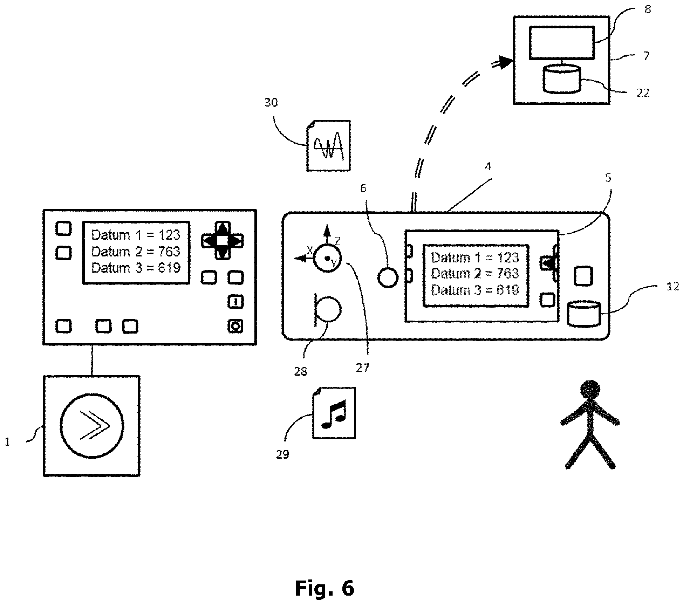

In Figur 6 sind verschiedene Möglichkeiten der Datenerfassung durch Beisteuerung von Sprachdateien/Bilddateien und/oder Schwingungsdaten veranschaulicht. In einer bevorzugten Ausgestaltung verfügt das mobile Endgerät über einen Beschleunigungssensor 27, ein Mikrofon 28 sowie die bereits angesprochene Kamera 6.

### Datenerfassung durch Sprachdaten:

Mit Hilfe des Mikrofons 28 können Sprachaufnahmen gemacht werden, um Sprachdaten 29 zu erzeugen. Die Sprachdaten 29 werden in Form einer Datei im Speicher 12 des mobilen Endgeräts 4 oder nach erfolgter Übertragung an einen entfernten Rechner mit den übrigen Daten zur Erstellung eines zusammenhängenden Datensatzes 25 kombiniert. Alternativ können die Sprachdaten 29 auch an den entfernten Rechner ohne vollständige Zwischenspeicherung gestreamt werden. Bei der Übertragung und/oder Speicherung von Sprachdaten können auch Speech-to-Text-Verfahren zur Anwendung gelangen, so dass im Ergebnis Textdaten gespeichert bzw. übertragen bzw. verarbeitet werden.

### Schwingungen:

Zur Erstellung einer Schwingungsdatei 30 mit entsprechenden Schwingungsdaten kann das mobile Endgerät 4 beispielsweise an geeigneter Stelle in berührendem Kontakt mit der zur analysierenden Drucklufterzeugungs- oder Druckluftaufbereitungskomponente gebracht werden. Die Schwingungsdaten werden in Form der bereits genannten Schwingungsdatei 30 im Speicher 12 des mobilen Endgeräts abgespeichert oder alternativ bzw. zusätzlich an einen entfernten Rechner übertragen. Gemäß einer Ausführungsvariante werden die Schwingungen der zu analysierenden Drucklufterzeugungs- oder Druckluftaufbereitungskomponente direkt an einer hierzu vorgesehenen geeigneten Fläche abgenommen. Dazu wird das mobile Endgerät 4 aufgelegt oder anderweitig an der Drucklufterzeugungs- oder Druckluftaufbereitungskomponente befestigt. Die Schwingungsdatei 30 kann entweder im Speicher 12 des mobilen Endgeräts 4 oder nach erfolgter Übertragung im Speicher 22 eines entfernten Rechners 7 mit den übrigen Daten zur Erstellung eines zusammenhängenden Datensatzes kombiniert werden.

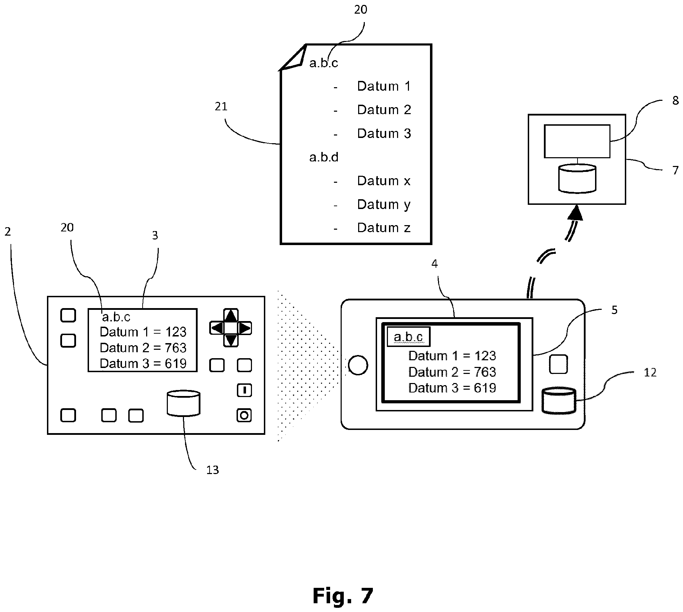

Figur 7 zeigt eine Veranschaulichung einer optional möglichen Datenreferenzierung. Die Datenstruktur, welche in einem Speicher 13 der elektronischen Steuerung 2 vorhanden sind, kann in einer Beschreibung 21 definiert sein. In dieser Beschreibung 21 ist mit einer eindeutigen Referenz 20 festgelegt, welche Daten gleichzeitig auf dem Display der elektronischen Steuerung 2 angezeigt werden. Die Referenz 20 wird gleichzeitig mit den Daten auf dem Display 3 dargestellt. Die Beschreibung 21 steht unabhängig zur Verfügung und kann sowohl vom mobilen Endgerät 4 als auch vom entfernten Rechner 7 genutzt werden. Bei der Decodierung wird die Referenz 20 ebenfalls decodiert.

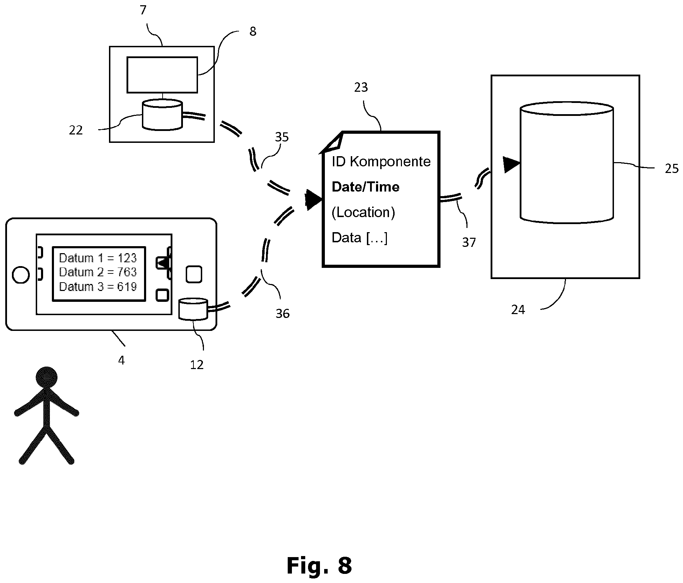

Figur 8 strebt eine Erläuterung verschiedener Möglichkeiten der Datenaufbereitung sowie Nutzung des zusammengeführten Datensatzes an. Die Daten sollen zusammengefasst werden und als zusammenhängender Datensatz 23 an ein weiteres Datenverarbeitungssystem zur Verfügung gestellt werden. Die Daten stehen im Speicher 12 des mobilen Endgeräts 4 und/oder im Speicher 22 des entfernten Rechners 7 zur Verfügung. Die Daten werden in einem zusammenhängenden Datensatz 23 zusammengefügt (vgl. Pfeile 35, 36). Dieser zusammenhängende Datensatz 23 ist über Identifikation der Komponente sowie Datum/Uhrzeit eineindeutig. Der zusammenhängende Datensatz 23 wird im Speicher 12 des mobilen Endgeräts 4 und/oder im Speicher 22 des entfernten Rechners 7 abgelegt. Der zusammenhängende Datensatz 23 kann auch in einem weiteren entfernten Rechner 24 zusammengefasst werden, indem die Daten an diesen Rechner übertragen werden (vgl. Pfeil 37). Der zusammengeführte Datensatz wird vorzugsweise in einem Speicher 25 des Rechners 24 abgelegt. Der Rechner 24 kann beispielsweise einem Instruktionsempfänger zugeordnet sein.

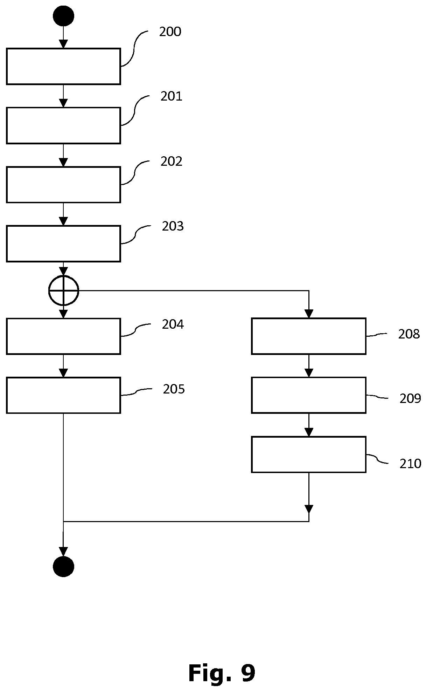

Figur 9 veranschaulicht eine mögliche Variante der Datenerfassung innerhalb des erfindungsgemäßen Verfahrens. In einem Ausleseschritt 200 werden Daten aus dem Speicher 13 einer elektronischen Steuerung 2 ausgelesen. In einem Darstellungsschritt 201 werden die ausgelesenen Daten auf dem Display 3 der elektronischen Steuerung 2 dargestellt. In einem Datenaufnahmeschritt 202 werden die auf dem Display 3 dargestellten Daten mit der Kamera 6 eines mobilen Endgeräts 4 erfasst und dabei mindestens ein, bevorzugterweise mehrere Fotos 5 oder ein Film 5' erstellt. Das Foto 5 bzw. der Film 5' wird in einem Speicherschritt 203 als Bilddatei 9 oder als Filmdatei 10 im Speicher 12 des mobilen Endgeräts 4 abgelegt.

In einem Extraktionsschritt 204 wird die Bilddatei 9 bzw. die Filmdatei 10 mit Hilfe eines Decodierverfahrens gemäß einer Decodierungsvorschrift im mobilen Endgerät 4 verarbeitet und Daten extrahiert. Die extrahierten Daten werden in einem zweiten Speicherschritt 205 als extrahierte Daten im Speicher 12 des mobilen Endgeräts 4 abgelegt.

Alternativ ist es auch möglich, dass die Bilddatei 9 bzw. die Filmdateien 10 in einem Übertragungsschritt 208 auf einen entfernten Rechner 7 übertragen werden. In einem Extraktionsschritt 209 wird die Bilddatei 9 bzw. die Filmdatei 10 mit Hilfe eines Decodierverfahrens gemäß einer Decodierungsvorschrift verarbeitet. In einem Speicherschritt 210 werden die extrahierten Daten im Speicher 22 des entfernten Rechners 7 abgelegt.

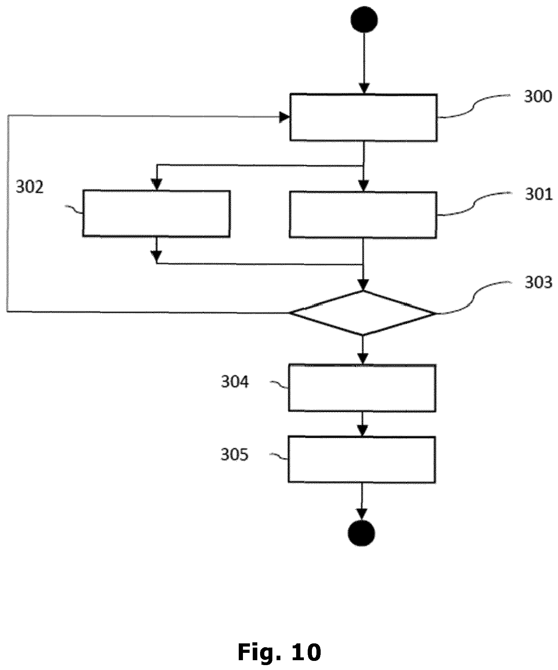

In Figur 10 ist eine mögliche Ausführungsform zur Erfassung von Zustandsdaten veranschaulicht. In einem Ausleseschritt 300 werden Daten aus dem Speicher 13 einer elektronischen Steuerung 2 ausgelesen. In einem Darstellungsschritt 301 werden die ausgelesenen Daten auf dem Display 3 der elektronischen Steuerung 2 dargestellt. In einem Datenaufnahmeschritt 302 wird das Display 3 mit der Kamera 6 des mobilen Endgeräts 4 gefilmt. In einem Überprüfungsschritt 303 wird überprüft, ob noch relevante, bislang nicht im Display 3 dargestellte Daten im Speicher 13 der elektronischen Steuerung 2 vorliegen. In einem Fertigstellungsschritt 304 wird überprüft, ob eine Fertigmeldung auf dem Display angezeigt werden kann. Dies kann beispielsweise dann erfolgen, wenn keine relevanten, noch nicht im Display 3 darstellte Daten mehr im Speicher 13 der elektronischen Steuerung vorhanden sind. Die erzeugte Filmdatei 10 wird entweder im Speicher 12 des mobilen Endgeräts 4 oder im Speicher 22 eines entfernten Rechners 7 abgelegt.

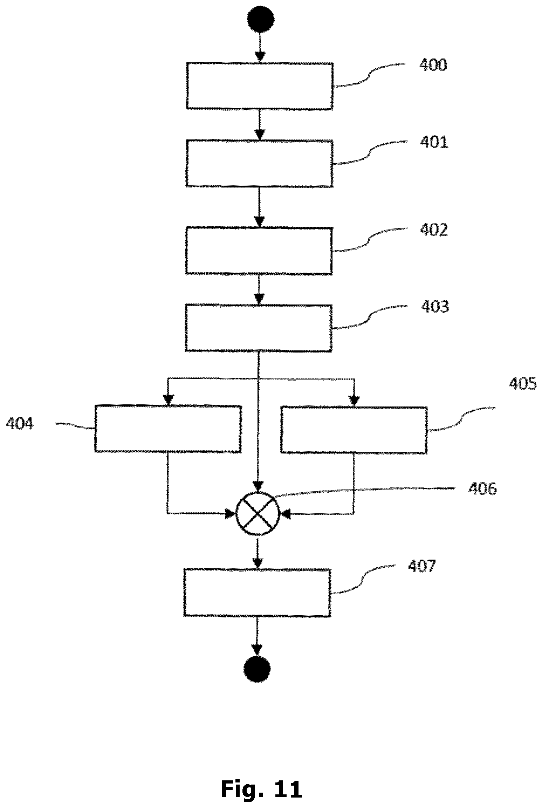

In Figur 11 ist eine alternative Ausführungsform eines Verfahrens zur Erfassung von Zustandsdaten veranschaulicht. In einem Ausleseschritt 400 werden Zustandsdaten und/oder Identifikationsdaten aus dem Speicher 13 der elektronischen Steuerung einer Drucklufterzeugungs- oder Druckluftaufbereitungskomponente ausgelesen. In einem Darstellungsschritt 401 werden die ausgelesenen Daten auf dem Display 3 der elektronischen Steuerung 2 dargestellt. In einem Datenaufnahmeschritt 402 werden sodann die ausgelesenen Daten mit der Kamera 6 eines mobilen Endgeräts 4 fotografiert bzw. gefilmt und entsprechende Bilddateien 9 bzw. Filmdateien 10 erzeugt. Die Bilddatei 9 bzw. die Filmdatei 10 wird im Speicher 12 des mobilen Endgeräts 4 oder im Speicher 22 eines entfernten Rechners 7 abgelegt. In einem Positionserfassungsschritt 404 werden Positionsdaten im mobilen Endgerät 4 erfasst. Auch Zeitdaten können in einem Zeitdatenerfassungsschritt 405 im mobilen Endgerät 4 erfasst werden. Die gewonnenen Positions- und/oder Zeitdaten werden der Bilddatei 9 bzw. der Filmdatei 10 zugeordnet.

Die so ergänzte Bilddatei 9 bzw. die so ergänzte Filmdatei 10 wird in einem weiteren Speicherschritt 407 im Speicher 12 des mobilen Endgeräts 4 oder im Speicher 22 eines entfernten Rechners 7 abgelegt.

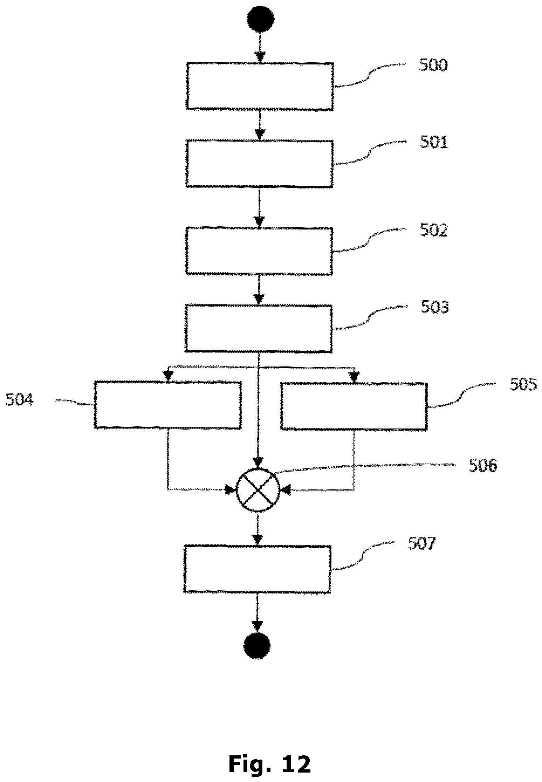

In Figur 12 ist eine nochmals alternative Ausführungsform des Verfahrens zur Erfassung von Zustandsdaten veranschaulicht. In einem Ausleseschritt 500 werden Zustandsdaten und/oder Identifikationsdaten aus dem Speicher 13 einer elektronischen Steuerung 2 einer zugeordneten Drucklufterzeugungs- oder Druckluftaufbereitungskomponente ausgelesen. In einem Darstellungsschritt 501 werden die ausgelesenen Daten auf dem Display 3 der elektronischen Steuerung 2 dargestellt. In einem Datenaufnahmeschritt 502 wird das Display 3 mit der Kamera 6 eines mobilen Endgerät 4 fotografiert und/oder gefilmt und entsprechende Bilddateien 9 bzw. Filmdateien 10 erzeugt.

In einem ersten Speicherschritt 503 wird die erzeugte Bilddatei 9 und/oder die erzeugte Filmdatei 10 im Speicher 12 des mobilen Endgeräts 4 oder im Speicher 22 eines entfernten Rechners 7 abgelegt.

In einem ergänzenden Datenerfassungsschritt 504, 505 werden zusätzliche Fotos 5" oder Filme 5"' mit der Kamera 6 des mobilen Endgeräts fotografiert bzw. gefilmt und im Speicher 12 des mobilen Endgeräts 4 oder im Speicher 22 eines entfernten Rechners 7 abgelegt. So erzeugte zusätzliche Bilddateien 9' bzw. zusätzlich erzeugte Filmdateien 10' werden den zuvor gespeicherten Filmdateien 9 bzw. Filmdateien 10 in einem Zuordnungsschritt 506 zur Erzeugung einer ergänzten Bilddatei 9" bzw. einer ergänzten Filmdatei 10" zugeordnet.

Die ergänzten Bilddateien 9" bzw. die ergänzten Filmdateien 10" werden im Speicher 12 des mobilen Endgeräts 4 oder im Speicher 22 des entfernten Rechners 7 abgelegt.

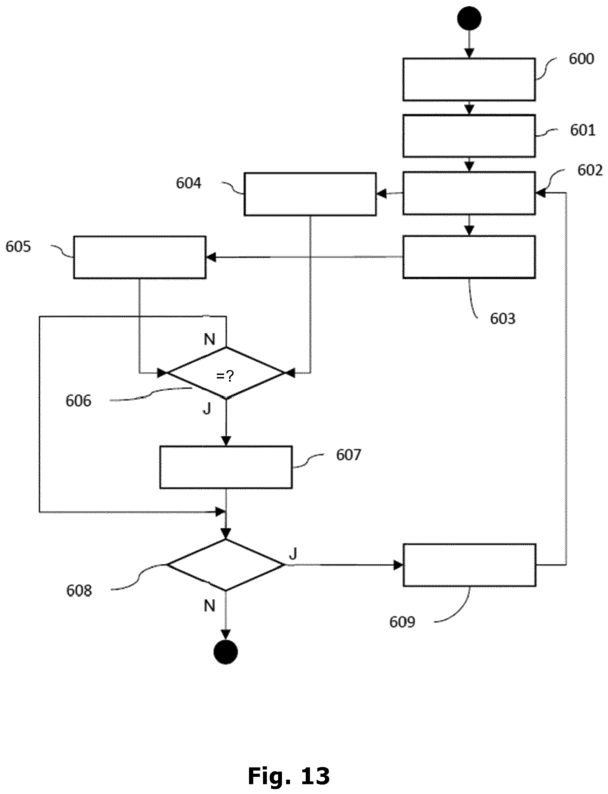

In Figur 13 ist eine nochmals abgewandelte Ausführungsform eines Verfahrens zur Datenerfassung zur Aufnahme einer Filmdatei dargestellt. Zunächst wird eine erfasste Filmdatei 10 in einem Zerlegungsschritt 600 in eine chronologische Folge von Einzelbildern 11 zerlegt. In einem Speicherschritt werden die Einzelbilder 11 als Bilddateien 9 im Speicher eines verarbeitenden Geräts gespeichert, beispielsweise im Speicher 12 des mobilen Endgeräts 4 oder im Speicher 22 eines entfernten Rechners 7. In einem Ladeschritt 602 wird die chronologisch älteste Bilddatei 9 aus dem Speicher 12, 22 geladen. Die chronologisch folgende Bilddatei 9 wird aus dem Speicher 12, 22 in einem Ladeschritt 603 geladen.

Die Bilddateien werden anschließend mit Hilfe eines Decodierverfahrens gemäß einer Decodiervorschrift verarbeitet und relevante Daten in einem Extraktionsschritt 604, 605 extrahiert. In einem Vergleichsschritt 606 werden die entsprechenden Daten verglichen. Bei Gleichheit der Daten wird in einem Löschungsschritt 607 die jüngere Bilddatei 9 im Speicher 12, 22 gelöscht. In einem Überprüfungsschritt 608 wird geprüft, ob mindestens zwei chronologisch jüngere Bilddateien 9 vorhanden sind. Falls ja, wird die chronologisch ältere dieser beiden Bilddateien aus dem Speicher 12, 22 in einem Ladeschritt 609 geladen. Die chronologisch jüngere Bilddatei wird ebenfalls in den Speicher 12, 22 in einem Ladeschritt 603 geladen. Insofern wird hier das bereits vorbeschriebene Verfahren iteriert, nämlich die Bilddateien 9 werden mit Hilfe eines Decodierverfahrens gemäß einer Decodierungsvorschrift verarbeitet und relevante Daten in einem Extrahierungsschritt 604, 605 extrahiert.

Das Verfahren wird fortgesetzt, bis keine chronologisch jüngere Datei im Überprüfungsschritt 608 mehr erkannt wird. Nach Verarbeitung der jüngsten Bilddatei steht eine reduzierte Menge an chronologischen Bilddateien zur Verfügung, welche jeweils unterschiedliche Dateninhalte haben.

### Bezugszeichenliste

- 100: Identifikations-Erfassungsschritt
- 101: Zustandsdaten-Erfassungsschritt
- 102: Instruktions-Erfassungsschritt
- 103: Personenerfassungsschritt
- 104: Zusammenführungsschritt
- -: Identifikationsdaten
- -: Zustandsdaten
- -: Instruktionsdaten
- -: Personendaten
- -: Instruktionsvorgang
- 2: elektronische Steuerung
- 3: Display
- 4: mobiles Endgerät
- 5, 5": Foto
- 5', 5"': Film
- 6: Kamera
- 7: entfernter Rechner
- 8: Verarbeitungsprogramm
- 9, 9": Bilddatei
- 10, 10": Filmdateien
- 11: Einzelbilder
- 12: Speicher (mobiles Endgerät)
- 13: Speicher (Steuerung)
- 14: GPS-Satellit
- 15: Mobilfunkzelle
- 16: WLAN-Router
- 17: Positionsdaten
- 18: Zeitdaten
- 19: Typenschild
- 20: Referenz
- 21: Beschreibung
- 22: Speicher (entfernter Rechner)
- 23: Datensatz
- 24: weiterer entfernter Rechner
- 25: Speicher (des weiteren entfernten Rechners 24)
- 27: Beschleunigungssensor
- 28: Mikrofon
- 29: Sprachdatei
- 30: Schwingungsdatei
- 35, 36: Zusammenfügung von Daten (zu einem Datensatz 23)
- 37: Übertragung (des Datensatzes 23)
- 200: Ausleseschritt
- 201: Darstellungsschritt
- 202: Datenaufnahmeschritt
- 203: Speicherschritt
- 204: Extraktionsschritt
- 205: zweiter Speicherschritt
- 206: Übertragungsschritt
- 207: dritter Speicherschritt
- 300: Ausleseschritt
- 301: Darstellungsschritt
- 302: Datenaufnahmeschritt
- 303: Überprüfungsschritt
- 304: Fertigstellungsschritt
- 400: Ausleseschritt
- 401: Darstellungsschritt
- 402: Datenaufnahmeschritt
- 404: Positionserfassungsschritt
- 405: Zeitdatenerfassungsschritt
- 407: weiterer Speicherschritt
- 500: Ausleseschritt
- 501: Darstellungsschritt
- 502: Datenaufnahmeschritt
- 503: erster Speicherschritt
- 504: ergänzender Datenerfassungsschritt
- 505: ergänzender Datenerfassungsschritt
- 506: Zuordnungsschritt
- 600: Zerlegungsschritt
- 601: Speicherschritt
- 602: Ladeschritt
- 603: Ladeschritt
- 604: Extraktionsschritt
- 605: Extraktionsschritt
- 606: Vergleichsschritt
- 607: Löschungsschritt
- 608: Überprüfungsschritt
- 609: Ladeschritt

## Patentansprüche

1. Verfahren zur Datenerfassung und -kombination, bei dem Daten einer Drucklufterzeugungs- oder Druckluftaufbereitungskomponente erfasst und mit weiteren Daten zur Erstellung eines Datensatzes kombiniert werden, umfassend die folgenden Schritte:
- einen Identifikations-Erfassungsschritt (100), bei dem Daten zur Identifikation der Komponenten erfasst werden,
- einen Zustandsdaten-Erfassungsschritt (101), bei dem Zustandsdaten der Drucklufterzeugungs- oder Druckluftaufbereitungskomponente erfasst werden,
- einen Instruktions-Erfassungsschritt (102), in dem Daten, die die gewünschten Instruktionen deklarieren, erfasst werden sowie
- einen Personenerfassungsschritt (103), in dem eine oder mehrere Personen bzw. eine Organisation als Verantwortlicher identifiziert werden und
- Zusammenführung der in dem Identifikations-Erfassungsschritt (100), dem Zustandsdaten-Erfassungsschritt (101), dem Instruktions-Erfassungsschritt (102) und dem Personenerfassungsschritt (103) erfassten Daten in einer elektronischen Datenverarbeitungseinrichtung zu einem über ein Datennetz übertragbaren zusammenhängenden Datensatz.

2. Verfahren nach Anspruch 1, **dadurch gekennzeichnet, dass** die Daten als zusammenhängender Datensatz einem Instruktionsempfänger zur Verfügung gestellt werden.

3. Verfahren nach Anspruch 1 oder 2, **dadurch gekennzeichnet, dass** im Identifikations-Erfassungsschritt (100) auf die in einer elektronischen Steuerung der Drucklufterzeugungs- oder Druckluftaufbereitungskomponente abgelegten bzw. zugreifbaren Daten zurückgegriffen wird, beispielsweise auf eine oder mehrere der folgenden Informationen:
- Identnummern der Drucklufterzeugungs- oder Druckluftaufbereitungskomponente,
- Identnummern relevanter Subkomponenten der Drucklufterzeugungs- oder Druckluftaufbereitungskomponente, wie eines Antriebsmotors, einer Steuerung, eines Verdichterblocks, etc.

4. Verfahren nach einem der Ansprüche 1 bis 3, **dadurch gekennzeichnet, dass** im Zustandsdaten-Erfassungsschritt (101) auf die in einer elektronischen Steuerung der Drucklufterzeugungs- oder Druckluftaufbereitungskomponente abgelegten bzw. zugreifbaren Daten zurückgegriffen wird.

5. Verfahren nach Anspruch 4, **dadurch gekennzeichnet, dass** im Zustandsdaten-Erfassungsschritt (101) auf in einer elektronischen Steuerung der Drucklufterzeugungs- oder Druckluftaufbereitungskomponente abgelegten bzw. zugreifbaren Zählerstände, wie beispielsweise die Zählerstände eines Wartungszählers, eines Laufstundenzählers, einen Laststundenzählers oder eines EnergieZählers zurückgegriffen wird.

6. Verfahren nach einem der Ansprüche 4 oder 5, **dadurch gekennzeichnet, dass** im Zustandsdaten-Erfassungsschritt (101) auf die in einer elektronischen Steuerung der Drucklufterzeugungs- oder Druckluftaufbereitungskomponente abgelegten bzw. zugreifbaren aktuellen Status- und Fehlermeldungen zurückgegriffen wird.

7. Verfahren nach einem der Ansprüche 4 bis 6, **dadurch gekennzeichnet, dass** im Zustandsdaten-Erfassungsschritt (101) auf die in einer elektronischen Steuerung der Drucklufterzeugungs- oder Druckluftaufbereitungskomponente abgelegten bzw. zugreifbaren Daten zurückgegriffen wird, einschließlich einer oder mehrerer der folgenden Informationen:
- Zeitinformationen, insbesondere Zeitstempel, umfassend Datum und Uhrzeit,
- Parametereinstellungen, wie als Standardeinstellung vorgegeben oder kundenspezifisch konfiguriert,
- eine Meldehistorie,
- aktuelle Prozessdaten (wie Drücke, Temperaturen, Drehzahlen, etc.),
- historische Prozessdaten,
- aggregierte bzw. verarbeitete Prozessdaten, wie beispielsweise eine räumlich über mehrere Temperatursensoren und/oder zeitlich über eine Zeitspanne gemittelte Motorwicklungstemperatur.

8. Verfahren nach einem der Ansprüche 1 bis 7, **dadurch gekennzeichnet, dass** in einem oder mehreren Datenerfassungsschritten, nämlich im Identifikations-Erfassungsschritt (100) oder im Zustandsdaten-Erfassungsschritt (101) oder im Instruktions-Erfassungsschritt (102) oder im Personenerfassungsschritt (103) die Daten durch ein mobiles Endgerät, wie beispielsweise ein Smartphone oder ein Tablet, erfasst werden und die Endgeräte-Erfassung eine oder mehrere der folgenden Eingabe- und/oder Erfassungsmöglichkeiten umfasst:
- Texteingabe
- Checkboxen zur binären Auswahl
- Fotoaufnahmen
- Filmaufnahmen
- Sprachaufnahmen
- Vibrationsmessungen

9. Verfahren nach einem der Ansprüche 1 bis 8, **dadurch gekennzeichnet, dass** in einem oder mehreren Datenerfassungsschritten, nämlich im Identifikations-Erfassungsschritt (100) oder im Zustandsdaten-Erfassungsschritt (101) oder im Instruktions-Erfassungsschritt (102) oder im Personenerfassungsschritt (103) die Daten durch ein mobiles Endgerät, wie beispielsweise ein Smartphone oder ein Tablet, erfasst werden und die Endgeräte-Erfassung die aktuelle geographische Position des mobilen Endgeräts umfasst.

10. Verfahren nach einem der Ansprüche 1 bis 9, **dadurch gekennzeichnet, dass** im Identifikations-Erfassungsschritt (100) die Daten zur Identifikation der Komponenten und/oder im Zustandsdaten-Erfassungsschritt (101) die Daten zur Erfassung der Zustandsdaten der Drucklufterzeugungs- oder Druckluftaufbereitungskomponente durch Auslesen eines der Steuerung zugeordneten Speichers der Drucklufterzeugungs- oder Druckluftaufbereitungskomponente erfasst werden.

11. Verfahren nach einem der Ansprüche 1 bis 10, **dadurch gekennzeichnet, dass** in einer Steuerung der Drucklufterzeugungs- oder Druckluftaufbereitungskomponente bereits vorhandene Daten an einem der Drucklufterzeugungs- oder Druckluftaufbereitungskomponente zugeordneten Display ausgegeben und mittels Aufnahme einer Bild-/Filmdatei (9, 10) erfasst werden.

12. Verfahren nach einem der Ansprüche 1 bis 11, **dadurch gekennzeichnet, dass** für den Identifikations-Erfassungsschritt (100) und/oder den Zustandsdaten-Erfassungsschritt (101) relevante Daten durch ein Bildverarbeitungsverfahren (insbesondere OCR-Verfahren - Optical-Character-Recognition-Verfahren) erfasst werden.

13. Verfahren nach Anspruch 8, 11 oder 12, **dadurch gekennzeichnet, dass** die erfassten Bild-/Filmdateien (9, 10) eine Filterung durchlaufen, um redundante Informationen zu reduzieren.

14. Verfahren nach einem der Ansprüche 8, 11, 12 oder 13, **dadurch gekennzeichnet, dass** die erfasste Filmdatei in eine Folge von Einzelbildern zerlegt werden.

15. Verfahren nach einem der Ansprüche 1 bis 14, **dadurch gekennzeichnet, dass** im Identifikations-Erfassungsschritt (100), im Zustandsdaten-Erfassungsschritt (101), im Instruktions-Erfassungsschritt (102), im Personenerfassungsschritt (103) oder im Schritt der Zusammenführung der Daten zu einem neuen Datensatz
eine Einbeziehung von Daten, die in einem mobilen Endgerät bereits vorhanden sind oder sich mit einem mobilen Endgerät ggf. auf Aufforderung erfassen lassen, erfolgt.

16. Verfahren nach Anspruch 15, **dadurch gekennzeichnet, dass** die Zusammenführung von Daten zu einem neuen Datensatz
- die Erfassung von Positions- und Zeitdaten,
- die Aufnahme von Bild- oder Filmdateien,
- die Aufnahme von Sprachdateien,
- die Aufnahme von Schwingungsdaten
umfasst.

17. Verfahren nach einem der Ansprüche 1 bis 16, **dadurch gekennzeichnet, dass** der Instruktions-Erfassungsschritt das Abfotografieren von Arbeitspapieren oder von bestimmten Abschnitten von Arbeitspapieren, die Informationen zu einzelnen Arbeitsschritten enthalten, umfasst.

18. Verfahren nach Ansprüchen 16 oder 17, **dadurch gekennzeichnet, dass** der Instruktions-Erfassungsschritt die Bereitstellung eines Arbeitsauftrags in elektronischer Form, insbesondere von einem mobilen Endgerät aus, umfasst.
